# EUROPÄISCHE PATENTANMELDUNG

(11) **EP 2 573 482 A1**
(43) Veröffentlichungstag der Anmeldung: **27.03.2013**
(21) Anmeldenummer: 11182382.9
(22) Anmeldetag: 22.09.2011
(51) Int. Cl.: F24H 8/00, C02F 1/66, E03F 5/18

(54) **Kondensathebeanlage**

(71) Anmelder: Grundfos Holding A/S, 8850 Bjerringbro (DK)
(72) Erfinder: Dal Canto, Riccardo, 57124 Livorno (IT); Iacaponi, Alessandro, San Lorenzo a Pagnatico (Cascina) Pisa (IT); Meyer, Thomas, 22457 Hamburg (DE); Schomäcker, Ralf, 33739 Bielefeld (DE)
(74) Vertreter: Patentanwälte Vollmann & Hemmer

(57) **Zusammenfassung**

Die Erfindung betrifft ein Kondensathebeanlagensystem mit einer Hebeeinheit (2), welche einen Sammelbehälter (6) und ein Pumpenaggregat (9) aufweist, sowie einer Neutralisationseinheit (4), welche einen Aufnahmeraum (20) für ein Neutralisationsmittel aufweist, wobei die Hebeeinheit (2) an ihrer Oberseite zur lösbaren Anbringung der Neutralisationseinheit (4) ausgebildet ist.

## Beschreibung

Die Erfindung betrifft ein Kondensathebeanlagensystem mit einer Hebeeinheit und einer Neutralisationseinheit.

Kondensathebeanlagen werden eingesetzt, um Kondensat beispielsweise aus Heizungsanlagen, welches auf einem Niveau unterhalb einer Abwasserleitung anfällt, auf das Niveau der Abwasserleitung zu pumpen bzw. anzuheben. Die Kondensathebeanlagen weisen in der Regel eine Hebeeinheit auf, welche einen Sammelbehälter hat, in welchen das zu fördernde Kondensat einströmt. In oder an dem Sammelbehälter ist ein Pumpenaggregat angeordnet, welches das Kondensat aus dem Sammelbehälter in eine höher gelegene Abwasserleitung pumpt. Das Pumpenaggregat wird in Abhängigkeit des Wasserstandes in dem Sammelbehälter ein- und ausgeschaltet. Dazu ist ein geeigneter Niveauschalter, beispielsweise ein Schwimmerschalter in oder an dem Sammelbehälter angeordnet. Da das Kondensat aus Heizungsanlagen häufig einen saueren pH-Wert hat, ist es in bestimmten Anwendungsfällen erforderlich oder vorgeschrieben, das Kondensat zu neutralisieren. Dazu werden Neutralisationseinheiten verwendet, in welchen ein geeignetes Neutralisationsmittel, beispielsweise in Form eines Granulats aus Kalkstein, Dolomit und/oder Magnesiumoxid oder Ähnlichem angeordnet ist. Das Kondensat wird durch dieses Neutralisationsmittel geführt, bevor es in die Hebeeinheit, das heißt deren Sammelbehälter einströmt. Wenn eine solche Neutralisationseinheit neben einer Hebeeinheit verwendet wird, erfordert dies eine aufwendigere Montage, da beide Einheiten in geeigneter Weise miteinander verbunden werden müssen.

Im Hinblick auf diese Problematik ist es Aufgabe der Erfindung, ein Kondensathebeanlagensystem bereitzustellen, welches eine einfache und flexible Kombination einer Hebeeinheit und einer Neutralisationseinheit ermöglicht.

Diese Aufgabe wird durch ein Kondensathebeanlagensystem mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

Das erfindungsgemäße Kondensathebeanlagensystem besteht aus zwei Komponenten, zum einen der Hebeeinheit und zum anderen einer Neutralisationseinheit, welche der Hebeeinheit im Strömungsweg des Kondensats vorgeschaltet werden kann. Die Hebeeinheit ist in bekannter Weise mit einem Sammelbehälter und einem an oder in dem Sammelbehälter angeordneten Pumpenaggregat ausgebildet. Das zu fördernde Kondensat strömt in den Sammelbehälter ein und wird aus diesem von dem Pumpenaggregat herausgepumpt in eine sich anschließende Austrittsleitung, welche in eine höher gelegene Abwasserleitung führen kann. Zum Ein- und Ausschalten des Pumpenaggregats ist an oder in dem Sammelbehälter in bekannter Weise ein Niveauschalter, beispielsweise in Form eines Schwimmerschalters angeordnet.

Um Kondensat mit sauerem pH-Wert zu neutralisieren, bevor es in den Sammelbehälter der Hebeeinheit einströmt, ist die Neutralisationseinheit vorgesehen, welche der Hebeeinheit im Strömungsweg ausgehend von der Kondensatquelle zu der Abwasserleitung vorgeschaltet wird. Die Neutralisationseinheit weist einen Aufnahmeraum für ein Neutralisationsmittel auf. Dies kann beispielsweise ein Granulat in der oben beschriebenen Form sein, durch welches das Kondensat geführt wird. Erfindungsgemäß ist die Hebeeinheit so ausgebildet, dass die Neutrolisationseinheit an ihrer Oberseite lösbar angebracht werden kann. Das heißt die Neutralisationseinheit kann direkt auf die Oberseite der Hebeeinheit aufgesetzt werden, wodurch sich der Installationsaufwand vereinfacht, da die Neutralisations- und die Hebeeinheit auf diese Weise so sehr leicht verbunden werden können und dann als eine Baugruppe am Einsatzort in Betrieb genommen werden können. Die lösbare Anbringung der Neutralisationseinheit an der Hebeeinheit hat jedoch den Vorteil, dass diese Neutralisationseinheit zum einen für Wartungszwecke an der Hebeeinheit abgenommen werden kann, zum anderen jedoch auch unabhängig von der Hebeeinheit, z. B. neben dieser aufgestellt werden kann. Dies kann beispielsweise dann erwünscht sein, wenn der Bauraum eine Anordnung der Neutralisationseinheit oberhalb der Hebeeinheit nicht zulässt. Darüber hinaus ist es auch möglich, dieselbe Hebeeinheit auch ohne die Neutralisationseinheit einzusetzen, beispielsweise dann, wenn das Kondensat eine Beschaffenheit aufweist, welche keine Neutralisation erfordert. So kann ein und dieselbe Hebeeinheit mit oder ohne Neutralisationseinheit verwendet und angeboten werden. Auf diese Weise wird die Teilevielfalt reduziert. Die Neutralisationseinheit kann beispielsweise als optionales Zubehör zu der Hebeeinheit vom Hersteller angeboten werden.

Um die Anbringung der Neutralisationseinheit an der Oberseite der Hebeeinheit zu begünstigen, weist die Hebeeinheit an ihrer Oberseite vorzugsweise eine Form auf, welche mit der Form der Unterseite der Neutralisationseinheit derart korrespondiert, dass die Oberseite der Hebeeinheit und die Unterseite der Neutralisationseinheit lösbar miteinander in Eingriff treten können. So kann beispielsweise eine Steckverbindung zwischen der Neutralisations- und der Hebeeinheit geschaffen werden, bei welcher die Neutralisationseinheit von oben auf die Hebeeinheit aufgesteckt wird und durch die Verbindung insbesondere in horizontaler Richtung fixiert wird, so dass sie nicht von der Oberseite der Hebeeinheit abrutschen kann. Zusätzlich könnte zwischen der Hebeeinheit und der Neutralisationseinheit eine kraft- und/oder formschlüssige Sicherung z. B. durch Schrauben vorgesehen sein.

Die Form der Oberseite der Hebeeinheit wird dabei vorzugsweise von einem äußeren Gehäuseteil der Hebeeinheit definiert. Dieses äußere Gehäuseteil ist insbesondere ein oberes Gehäuseteil, welches die elektrischen Komponenten der Hebeeinheit abdeckt, so beispielsweise den elektrischen Antriebsmotor und gegebenenfalls Schalteinrichtungen. Es ist bevorzugt, dass dieses obere äußere Gehäuseteil immer auf der Hebeeinheit verbleibt, unabhängig davon, ob die Neutralisationseinheit auf die Hebeeinheit aufgesetzt ist oder nicht. Es ist somit nicht erforderlich, irgendwelche Gehäuseteile der Hebeeinheit zu demontieren, bevor die Neutralisationseinheit auf die Hebeeinheit aufgesetzt wird. Dadurch wird zum einen die Montage vereinfacht, zum anderen behält das äußere Gehäuseteil der Hebeeinheit seine Schutzfunktion, elektrische Komponenten im Inneren abzudecken.

Ferner ist es bevorzugt, dass die Neutralisationseinheit an ihrer Unterseite zumindest eine Austrittsöffnung aufweist und die Hebeeinheit an ihrer Oberseite zumindest eine Eintrittsöffnung aufweist, welche derart angeordnet sind, dass wenn die Neutralisationseinheit an der Oberseite der Hebeeinheit angeordnet ist, die Austrittsöffnung der Eintrittsöffnung gegenüberliegt. So kann Kondensat aus der Austrittsöffnung der Neutrolisationseinheit direkt schwerkraftbedingt in die Eintrittsöffnung der Hebeeinheit einströmen. Dies ermöglicht darüber hinaus eine sehr einfache Montage, da keine aufwendigen Verbindungen zwischen der Neutralisationseinheit und der Hebeeinheit hergestellt werden müssen. Besonders bevorzugt ist im Bereich der Eintrittsöffnung oder im Bereich der Austrittsöffnung eine Dichtung angeordnet, welche Eintrittsöffnung und Austrittsöffnung, wenn sie übereinander zu liegen kommen, nach außen abdichten. Besonders bevorzugt greift die Neutralisationseinheit mit einem Rohrabschnitt, an dessen Ende die Austrittsöffnung gelegen ist, in die Eintrittsöffnung der Hebeeinheit ein. Dabei kann in der Eintrittsöffnung eine Dichtung angeordnet sein, an welcher der Rohrabschnitt dichtend zur Anlage kommt.

Besonderes bevorzugt weist die Neutralisationseinheit mehrere Austrittsöffnungen auf und die Hebeeinheit an ihrer Oberseite eine der Anzahl der Austrittsöffnungen entsprechende Anzahl von Eintrittsöffnungen, wobei die Eintrittsöffnungen derart angeordnet sind, dass, wenn die Neutralisationseinheit an der Oberseite der Hebeeinheit angeordnet ist, jeweils eine Austrittsöffnung einer der Eintrittsöffnungen gegenüberliegt. Dabei kann die Verbindung jeweils zwischen Austrittsöffnung und Eintrittsöffnung bei allen Verbindungen in der vorangehend beschriebenen Weise erfolgen. Besonders bevorzugt sind vier Austrittsöffnungen an der Neutralisationseinheit und vier Eintrittsöffnungen an der Hebeeinheit vorgesehen. Wenn Neutralisations- und Hebeeinheit einen im Wesentlichen rechteckigen Querschnitt aufweisen, ist es bevorzugt, dass die Austrittsöffnungen und die Eintrittsöffnungen in der Nähe der vier Ecken des Querschnitts angeordnet sind. Die Neutralisationseinheit weist dazu besonders bevorzugt an ihrer Unterseite an den Ecken angeordnete vier Rohrabschnitte auf, welche jeweils in eine der vier Eintrittsöffnungen eintreten, welche an der Oberseite der Hebeeinheit an deren vier Ecken angeordnet sind. Dabei kann eine Abdichtung mittels einer Dichtung erfolgen, wie sie vorangehend beschrieben wurde.

Gemäß einer weiteren bevorzugten Ausführungsform weist die Neutralisationseinheit zumindest eine Ausnehmung auf, welche zur Aufnahme einer sich von der Hebeeinheit wegerstreckenden Austrittsleitung ausgebildet ist. Eine solche Austrittsleitung erstreckt sich von der Hebeeinheit vorzugsweise nach oben weg. Um nun dennoch die Neutralisationseinheit an der Oberseite der Hebeeinheit anordnen zu können, weist die Neutralisationseinheit vorzugsweise die beschriebene Ausnehmung auf, durch welche sich die Austrittsleitung der Hebeeinheit hindurch weiter nach oben erstrecken kann. Eine solche Ausnehmung erstreckt sich vorzugsweise über die gesamte vertikale Ausdehnung der Neutralisationseinheit, sodass die Austrittsleitung an der Oberseite der Neutralisationseinheit austreten kann.

Gemäß einer speziellen Ausführungsform weist die Neutralisationseinheit an ihrer Unterseite Standfüße zum Aufstellen der Neutralisationseinheit auf. Diese Standfüße sind weiter bevorzugt abnehmbar ausgebildet. Die Standfüße ermöglichen das optionale Aufstellen der Neutralisationseinheit unabhängig von der Hebeeinheit. So kann die Neutralisationseinheit beispielsweise auf den Standfüßen neben der Hebeeinheit aufgestellt werden, anstatt auf deren Oberseite aufgesteckt zu werden. Die abnehmbaren Standfüße haben den Vorteil, dass für den Fall, dass die Neutralisationseinheit, wie vorangehend beschrieben auf die Oberseite der Hebeeinheit aufgesetzt werden soll, die Standfüße abgenommen werden können. Das heißt die Standfüße werden nur dann montiert, wenn die Neutralisationseinheit auf einer Fläche unabhängig von der Hebeeinheit aufgestellt werden soll.

Weiter bevorzugt ist zumindest einer der Standfüße als ein Verschlusselement ausgebildet, welches in eine Austrittsöffnung an der Unterseite der Neutralisationseinheit dichtend einsetzbar ist. Vorzugsweise sind alle Standfüße als solche Verschlusselemente ausgebildet. Dabei sind bevorzugt so viele Standfüße wie Austrittsöffnungen vorgesehen, sodass alle Austrittsöffnungen durch jeweils einen Standfuß verschlossen werden können. Wenn, wie oben beschrieben, vier Austrittsöffnungen vorgesehen sind, welche beispielsweise an den vier Ecken der Unterseiten der Neutralisationseinheit ausgebildet sind, können entsprechend vier Standfüße, welche als Verschlusselemente ausgebildet sind, vorgesehen sein, um diese vier Austrittsöffnungen zu verschließen und gleichzeitig die Standfüße zum Aufstellen der Neutralisationseinheit an dieser anzubringen. Wenn die Neutralisationseinheit nicht auf die Hebeeinheit aufgesetzt, sondern unabhängig von dieser aufgestellt wird, werden die Austrittsöffnungen an der Unterseite bevorzugt nicht verwendet und verschlossen, da in diesem Fall dann das Kondensat auf andere Weise von der Neutralisationseinheit zu der Hebeeinheit geleitet werden kann, wie weiter unten näher beschrieben wird. Durch die Doppelfunktion der Standfüße, welche gleichzeitig die nicht benötigten Austrittsöffnungen abdichten, wird die Zahl der erforderlichen Einzelteile reduziert und darüber hinaus die Montage vereinfacht.

Für den Fall, dass die Neutralisationseinheit unabhängig von der Hebeeinheit, insbesondere neben dieser aufgestellt wird, weist die Neutralisationseinheit bevorzugt zumindest eine seitliche Austrittsöffnung auf. Das heißt, wenn die Neutralisationseinheit neben der Hebeeinheit aufgestellt wird, kann diese seitliche Austrittsöffnung verwendet werden, um das Kondensat aus der Neutralisationseinheit zu der Hebeeinheit abzuleiten. Die unteren Austrittsöffnungen werden dann bevorzugt, wie vorangehend beschrieben, verschlossen. Zweckmäßigerweise sind an der Neutralisationseinheit mehrere seitliche Austrittsöffnungen angeordnet. Bevorzugt sind an zumindest zwei voneinander abgewandten, insbesondere an zwei entgegengesetzten Seitenflächen der Neutralisationseinheit jeweils seitliche Austrittsöffnungen vorgesehen. So kann der Kondensataustritt zu verschiedenen Seiten hin erfolgen, je nachdem an welcher Seite der Neutralisationseinheit die Hebeeinheit angeordnet wird.

Gemäß einer besonderen Ausführungsform der Erfindung kann die Neutralisationseinheit Befestigungsmittel aufweisen, welche zur Befestigung der Neutralisationseinheit an einer Wand ausgebildet sind. Dies ermöglicht es, die Neutralisationseinheit gegebenenfalls auch neben der Hebeeinheit an einer Wand zu befestigen. Wenn die Neutralisationseinheit auf die Hebeeinheit aufgesetzt ist, kann die Neutralisationseinheit idealerweise gemeinsam mit der Hebeeinheit befestigt werden, wenn die Anbringung an einer Wand gewünscht sein sollte.

Die beschriebene seitliche Austrittsöffnung der Neutralisationseinheit weist vorzugsweise von einer unteren Aufstandfläche der Neutralisationseinheit, welche beispielsweise von Standfüßen gebildet wird, einen vertikalen Abstand auf, welcher größer ist, als der vertikale Abstand zumindest einer Eintrittsöffnung der Hebeeinheit von deren unterer Aufstandsflöche. Auf diese Weise wird sichergestellt, dass, wenn die Hebeeinheit und die Neutralisationseinheit nebeneinander auf einer ebenen Aufstandfläche aufgestellt werden, der Ablauf des Kondensats aus der seitlichen Austrittsöffnung der Neutralisationseinheit in die Eintrittsöffnung der Hebeeinheit möglich ist. Dies ist nur bei höherer Anordnung der seitlichen Austrittsöffnung als der Eintrittsöffnung der Hebeeinheit möglich. Die Neutralisationseinheit kann dazu entsprechend hohe Standfüße oder Aufstandselemente aufweisen, welche den beschriebenen Abstand von der Aufstandsfläche gewährleisten.

Weiter bevorzugt hat der Aufnahmeraum für ein Neutralisationsmittel in der Neutralisationseinheit von einer unteren Aufstandsfläche der Neutralisationseinheit, welche vorzugsweise von den beschriebenen Standfüßen gebildet wird, einen vertikalen Abstand, welcher größer ist als der vertikale Abstand zumindest einer Eintrittsöffnung der Hebeeinheit von deren unterer Aufstandsfläche. Insbesondere liegt die Unterseite bzw. der Boden des Aufnahmeraums vertikal über der Eintrittsöffnung der Hebeeinheit, wenn die Neutralisationseinheit und die Hebeeinheit nebeneinander auf einer ebenen Fläche aufgestellt werden. Auf diese Weise wird der Ablauf des Kondensats aus dem Aufnahmeraum in die Hebeeinheit gewährleistet. Dieser Ablauf des Kondensats erfolgt dann besonders bevorzugt durch die vorangehend beschriebene seitliche Austrittsöffnung der Neutralisationseinheit und dann über einen Schlauch oder eine Rohrleitung in eine Eintrittsöffnung der Hebeeinheit. Besonders bevorzugt weist die Neutralisationseinheit zumindest an ihrer Unterseite eine Umfangskontur auf, welche der Umfangskontur der Hebeeinheit zumindest an deren Oberseite entspricht. Die Ausgestaltung von Hebeeinheit und Neutralisationseinheit mit gleichen bzw. passenden Umfangskonturen hat den Vorteil, dass wenn die Neutralisationseinheit auf die Hebeeinheit aufgesetzt wird, zwischen beiden ein harmonischer Übergang geschaffen wird. Insbesondere weisen die Hebeeinheit und die Neutralisationseinheit dann fluchtende Außenflächen bzw. Außenseiten auf, welche harmonisch aneinander anschließen bzw. ineinander übergehen.

Die Neutralisationseinheit für das vorangehend beschriebene Kondensathebeanlagensystem kann darüber hinaus noch ein weiteres bevorzugtes Merkmal aufweisen, welches auch unabhängig von den übrigen vorangehend beschriebenen Merkmalen realisiert werden kann. So kann die Neutralisationseinheit einen Aufnahmeraum für ein Neutralisationsmittel, beispielsweise ein Granulat aus Dolomit oder Magnesiumoxid und/oder Ähnlichem aufweisen. Gemäß dieser besonderen Ausführungsform ist an oder in dem Aufnahmeraum ein Prüfmittel zum Erfassen des pH-Wertes des Neutralisationsmittels angeordnet. Das Prüfmittel ist beispielsweise als Indikator ausgebildet, welcher bei Erreichen eines vorbestimmten pH-Wertes dies signalisiert oder zur Anzeige bringt. Im einfachsten Fall kann das Prüfmittel ein Teststreifen sein, welcher bei Veränderung des pH-Wertes seine Farbe verändert. Über das Prüfmittel kann dann leicht festgestellt werden, ob das Granulat bzw. Neutralisationsmittel verbraucht ist und ersetzt werden muss. Wenn das Prüfmittel das Erreichen eines vorbestimmten pH-Wertes signalisiert, beispielsweise durch Farbveränderung, weiß der Nutzer, dass er das Neutralisationsmittel austauschen muss. Besonders bevorzugt kann das Neutralisationsmittel gemeinsam mit dem Prüfmittel in einer austauschbaren Patrone untergebracht sein, welche dann vollständig ausgetauscht werden kann. Das heißt die verbrauchte Patrone wird dem Aufnahmeraum entnommen und stattdessen eine neue Patrone eingesetzt. So wird eine sehr einfache Wartung der Neutralisationseinheit möglich.

Nachfolgend wird die Erfindung anhand der beigefügten Figuren beispielhaft beschrieben. In diesen zeigt:
- Fig. 1: eine Ansicht eines erfindungsgemäßen Kondensathebeanlagensystems, bei welchem eine Neutralisationseinheit auf die Hebeeinheit aufgesetzt ist,
- Fig. 2: das Kondensathebeanlagensystem, wenn die Neutralisationseinheit neben der Hebeeinheit aufgestellt ist,
- Fig. 3: eine Schnittansicht der Anordnung gemäß Fig. 2,
- Fig. 4: vergrößert den Ausschnitt IV aus Fig. 3,

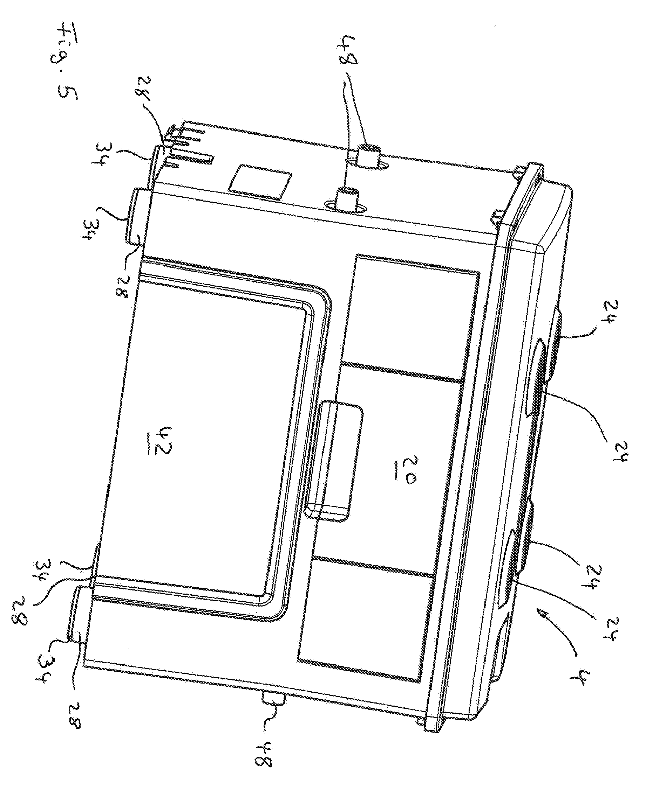

- Fig. 5: eine perspektivische Ansicht der Neutralisationseinheit, und

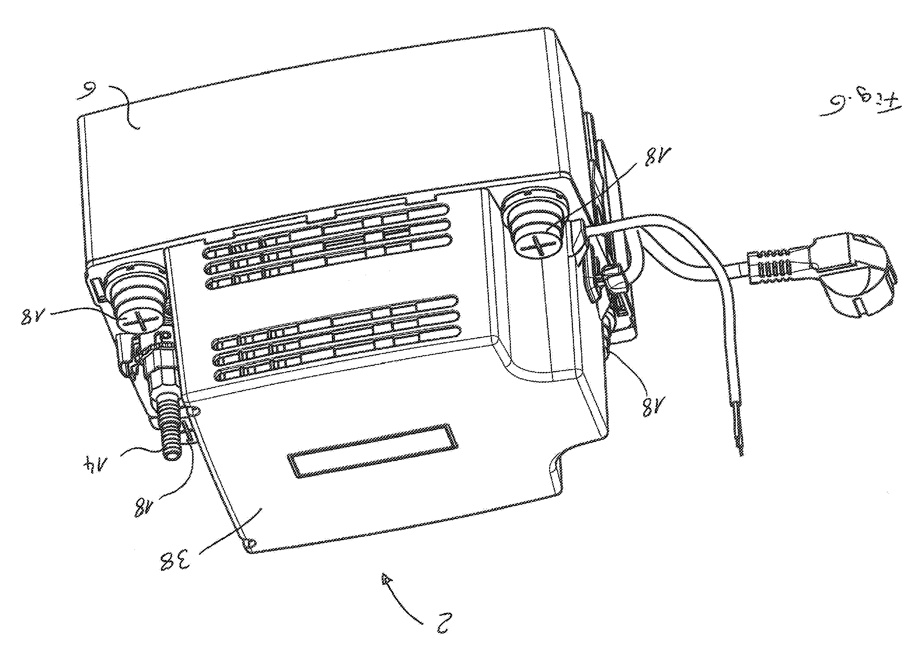

- Fig. 6: eine perspektivische Ansicht der Hebeeinheit.

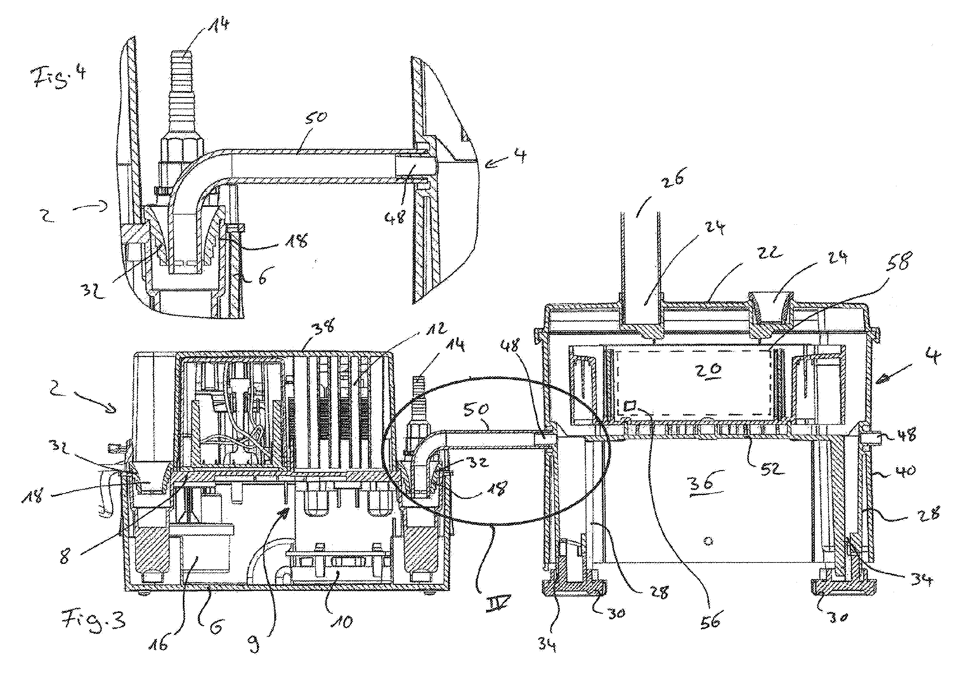

Das gezeigte Kondensathebeanlagensystem besteht grundsätzlich aus zwei Bestandteilen bzw. Einheiten, nämlich zum einen einer Hebeeinheit 2 und zum anderen einer Neutralisationseinheit 4. Wie in der Schnittansicht von Fig. 3 zu erkennen ist, weist die Hebeeinheit 2 einen Sammelbehälter 6 auf, welcher an seiner Oberseite offen ausgebildet ist. Die offene Oberseite des Sammelbehälters 6 ist durch einen Deckel 8 verschlossen. Der Deckel 8 trägt ein Pumpenaggregat 9, wobei die Pumpe 10 des Pumpenaggregates unterhalb des Deckels 8 im Inneren des Sammelbehälters 6 angeordnet ist und ein elektrischer Antriebsmotor 12 des Pumpenaggregats oberhalb des Deckels 8 angeordnet ist und die Pumpe 10 über eine hier nicht gezeigte Welle antreibt. Die Pumpe 10 ist dazu vorgesehen, Kondensat bzw. Abwasser aus dem Inneren des Sammelbehälters 6 in eine Austrittsleitung 14 zu pumpen. Zum Ein- und Ausschalten des Pumpenaggregats 9 in Abhängigkeit vom Wasserstand im Inneren des Sammelbehälters 6 ist in dem Sammelbehälter 6 ein Schwimmerschalter 16 angeordnet.

In dem Deckel 8 sind an den vier Ecken vier Eintrittsöffnungen 18 vorgesehen, durch welche Kondensat bzw. Abwasser in das Innere des Sammelbehälters 6 eintreten kann.

Die zweite Einheit des Kondensathebeanlagensystems ist die Neutralisationseinheit 4. Diese weist in ihrem Inneren einen Aufnahmeraum 20 auf, in welchem ein Neutralisationsmittel, beispielsweise ein Granulat, welches Dolomit oder ähnliches enthält, angeordnet werden kann. Ober halb des Aufnahmeraumes 20 ist die Neutralisationseinheit 4 von einem Deckel verschlossen, in dem Eintrittsöffnungen 24 angeordnet sind. Die Eintrittsöffnungen 24 dienen zum Anschluss zumindest einer Eingangsleitung, welche Kondensat beispielsweise von einer Heizungsanlage zuführt. Vorzugsweise sind vier Eintrittsöffnungen 24 im Deckel angeordnet, wobei in den hier gezeigten Ansichten nur zwei Eintrittsöffnungen erkennbar sind. Die mehreren Eintrittsöffnungen 24 dienen dazu, Eingangsleitungen 26 aus verschiedenen Richtungen anschließen zu können.

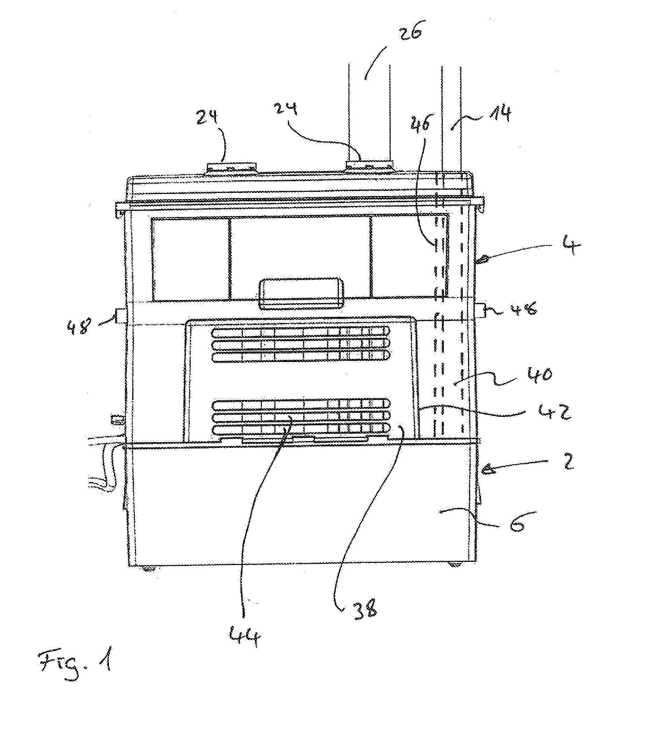

Die Neutralisationseinheit 4 weist unterhalb des Aufnahmeraums 20 vier rohrförmige Füße 28 auf, welche an den vier Ecken des Aufnahmeraumes 20, welche einen im Wesentlichen rechteckigen Querschnitt aufweist, angeordnet sind. Die rohrförmigen Füße 28 sind an ihrer Oberseite mit dem Aufnahmeraum 20 verbunden und an ihrem unteren Ende offen ausgebildet. Die Neutralisationseinheit 4 ist so ausgebildet, dass sie so, wie in Fig. 1 gezeigt, auf die Oberseite der Hebeeinheit 2 aufgesetzt werden kann. Dazu werden die Standfüße 30 aus den offenen unteren Enden der Füße 28 entnommen. Dann können die rohrförmigen Füße 28 von oben in die Eintrittsöffnungen 18 der Hebeeinheit 2 eingesetzt werden, wobei sie durch die Dichtungen 32 nach außen abgedichtet werden. Bei dieser Anordnung bilden die unteren Enden der rohrförmigen Füße 28 somit Austrittsöffnungen 34, welche den Eintrittsöffnungen 18 gegenüberliegen bzw. in diese eingreifen. So kann neutralisiertes Kondensat, welches aus dem Aufnahmeraum 20 austritt, durch die rohrförmigen Füße direkt in die Eintrittsöffnungen 18 der Hebeeinheit 2 hineinlaufen.

Damit die Neutralisationseinheit 4 auf die Hebeeinheit 2 in der in Fig. 1 gezeigten Weise aufgesetzt werden kann, ist der Freiraum 36 zwischen den rohrförmigen Füßen 28 so ausgebildet, dass der obere Gehäuseteil 38 der Hebeeinheit 2, welcher insbesondere den Elektromotor 12 überdeckt, in diesen Freiraum 36 eingreifen kann und dort aufgenommen wird. Die Neutralisationseinheit 4 ist in ihrem unteren Bereich, welcher von den rohrförmigen Füßen 28 gebildet wird, von einer Außenwand 40 verkleidet, welche an ihrem unteren Ende eine Querschnittsform hat, welche im Wesentlichen der Querschnittsform des oberen Endes des Sammelbehälters 6 entspricht, sodass, wenn die Neutralisationseinheit 4 auf die Hebeeinheit 2 aufgesetzt ist, zwischen beiden ein glatter bzw. harmonischer Übergang erreicht wird, wie in Fig. 1 zu sehen ist. Die Außenwand 40 weist an einer Seite eine Aussparung 42 auf, in welche direkt die Außenwand des oberen Gehäuseteils 38 der Hebeeinheit 2 eingreift, sodass dessen Kühlöffnungen 44 auch bei aufgesetzter Neutralisationseinheit 4 nach außen geöffnet bleiben.

Die Neutralisationseinheit 4 weist darüber hinaus an einer Seite eine sich vertikal erstreckende Ausnehmung 46 auf, durch welche sich die Austrittsleitung 14 vertikal nach oben hindurch erstrecken kann.

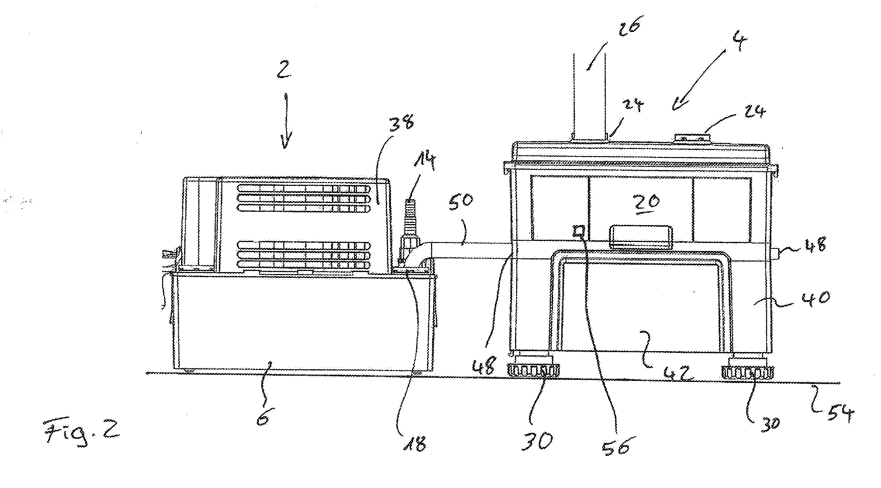

Anstatt die Neutralisationseinheit 4 auf die Hebeeinheit 2 aufzusetzen, wie in Fig. 1 gezeigt ist, kann die Neutralisationseinheit 4 auch neben der Hebeeinheit 2 aufgestellt werden, wie in den Fig. 2 und 3 gezeigt ist. Bei dieser Anordnung sind die Austrittsöffnungen 34 an den unteren Enden der rohrförmigen Füße 28 durch die Standfüße 30 verschlossen. Die Standfüße 30 sind vorzugsweise aus einem Elastomer oder Gummi ausgebildet und bilden somit gleichzeitig Verschlussstopfen. Bei dieser Anordnung wird eine seitliche Austrittsöffnung 48 genutzt, welche in etwa am Boden des Aufnahmeraumes 20 angeordnet ist, das heißt am oberen Ende der rohrförmigen Füße 28 gelegen ist. An diese seitliche Austrittsöffnung 28 ist ein Schlauch bzw. ein Rohr 50 angeschlossen, welches in eine Eintrittsöffnung 18 und die darin angeordnete Dichtung 32 der Hebeeinheit 2 eingreift. Die rohrförmigen Füße 28 weisen eine derartige vertikale Höhe auf, dass der Boden 52 des Aufnahmeraumes vertikal oberhalb der Eintrittsöffnung 18 gelegen ist, wenn sowohl die Hebeeinheit 2 als auch die Aufnahmeeinheit 4 gemeinsam nebeneinander auf einer planen Fläche 54 aufgestellt sind. So kann das Kondensat aus dem Aufnahmeraum 40 über das Rohr 50 in den Sammelbehälter 6 fließen.

Die Standfüße 30 sind vorzugsweise in den Austrittsöffnungen 34 höhenverstellbar, beispielsweise über ein Gewinde oder eine spiralförmige Anlagefläche. So ermöglichen die Standfüße 30 eine Ausrichtung der Neutralisationseinheit 4 auch auf unebenem oder schrägem Untergrund.

Wie in den Fig. 1, 2 und 3 zu erkennen ist, weist die Neutralisationseinheit 4 auch mehrere seitliche Austrittsöffnungen 48 auf. Von diesen ist in dem gezeigten Beispiel nur eine genutzt. Die anderen sind auf geeignete Weise verschlossen. Dies kann beispielsweise dadurch erfolgen, dass die Öffnungen 48 grundsätzlich zunächst durch eine Wandung verschlossen sind und lediglich die Öffnung 48, welche benötigt wird, geöffnet wird, indem die Wandung herausgebrochen wird. Alternativ wäre ein Verschluss durch Verschlussstopfen möglich. Diese Anordnung mehrerer seitlicher Austrittsöffnungen 48 schafft die Möglichkeit, die Neutralisationseinheit 4 auch an der anderen Seite der Hebeeinheit 4 anzuordnen, das heißt bezogen auf die hier gezeigten Beispiele nichts rechts sondern links. Dann würde auch entsprechend eine andere Eintrittsöffnung 18 der Hebeeinheit genutzt, um die Neutralisationseinheit 4 mit der Hebeeinheit 2 über ein Rohr 50 zu verbinden.

In der in Fig. 2 und 3 gezeigten Anordnung könnten die Hebeeinheit 2 und die Neutralisationseinheit 4, anstatt sie auf eine Aufstellfläche 54 aufzustellen, auch an einer Wand befestigt werden. Dazu können die Hebeeinheit 2 und die Neutralisationseinheit 4 an einer Seitenwandung Befestigungsmittel aufweisen, welche hier nicht näher gezeigt sind.

Es ist zu erkennen, dass der modulare Aufbau des Kondensathebeanlagensystems, bestehend aus der Hebeeinheit 2 und der Neutralisationseinheit 4 eine sehr flexible Installation ermöglicht, da je nach vorhandenem Platz entweder die Neutralisationseinheit 4 auf der Hebeeinheit 2 angeordnet werden kann oder beide, wie in den Fig. 2 und 4 gezeigt, alternativ auch nebeneinander angeordnet werden können. Darüber hinaus kann dieselbe Hebeeinheit 2 auch gänzlich ohne die Neutralisationseinheit 4 Verwendung finden, wenn eine Neutralisation des Kondensats nicht erforderlich ist. In dem Fall könnte dann die Eingangsleitung 26 direkt in eine der Eintrittsöffnungen 18 an dem Sammelbehälter 6 geführt werden.

Um zu erkennen, wann das Neutralisationsmittel in dem Aufnahmeraum 20 verbraucht ist, kann in dem Aufnahmeraum 20 ein Indikator 56 beispielsweise in Form eines Lackmuspapiers angeordnet sein, welches sich verfärbt, wenn sich der pH-Wert im Inneren des Sammelbehälters 20 ändert. So kann von außen erkannt werden, ob das Neutralisationsmittel verbraucht ist und ausgetauscht werden muss. Zum einfachen Austausch können das Neutralisationsmittel und der Indikator 56 gemeinsam in einer austauschbaren, in den Aufnahmeraum 20 eingesetzten Patrone 58 angeordnet sein.

### Bezugszeichenliste

- 2 -: Hebeeinheit
- 4 -: Neutralisationseinheit
- 6 -: Sammelbehälter
- 8 -: Deckel
- 9 -: Pumpenaggregat
- 10 -: Pumpe
- 12 -: Elektromotor
- 14 -: Austrittsleitung
- 16 -: Schwimmerschalter
- 18 -: Eintrittsöffnungen
- 20 -: Aufnahmeraum
- 22 -: Deckel
- 24 -: Eintrittsöffnungen
- 26 -: Eingangsleitung
- 28 -: rohrförmige Füße
- 30 -: Standfüße
- 32 -: Dichtungen
- 34 -: Austrittsöffnungen
- 36 -: Freiraum
- 38 -: Gehäuseteil
- 40 -: Außenwand
- 42 -: Aussparung
- 44 -: Kühlöffnungen
- 46 -: Ausnehmung
- 48 -: Austrittsöffnungen
- 50 -: Rohr
- 52 -: Boden
- 54 -: Fläche
- 56 -: Indikator
- 58 -: Patrone

## Patentansprüche

1. Kondensathebeanlagensystem mit einer Hebeeinheit (2), welche einen Sammelbehälter (6) und ein Pumpenaggregat (9) aufweist, sowie einer Neutralisationseinheit (4), welche einen Aufnahmeraum (20) für ein Neutralisationsmittel aufweist,
**dadurch gekennzeichnet, dass**
die Hebeeinheit (2) an ihrer Oberseite zur lösbaren Anbringung der Neutralisationseinheit (4) ausgebildet ist.

2. Kondensathebeanlagensystem nach Anspruch 1, **dadurch gekennzeichnet, dass** die Hebeeinheit (2) an ihrer Oberseite eine Form aufweist, welche mit der Form der Unterseite der Neutralisationseinheit (4) derart korrespondiert, dass die Oberseite (38) der Hebeeinheit (2) und die Unterseite der Neutralisationseinheit (4) lösbar miteinander in Eingriff treten können.

3. Kondensathebeanlagensystem nach Anspruch 2, **dadurch gekennzeichnet, dass** die Form der Oberseite der Hebeeinheit von einem äußeren Gehäuseteil (38) der Hebeeinheit (2) definiert wird.

4. Kondensathebeanlagensystem nach einem der Ansprüche 1 bis 3, **dadurch gekennzeichnet, dass** die Neutralisationseinheit (4) an ihrer Unterseite zumindest eine Austrittsöffnung (34) aufweist und die Hebeeinheit (2) an ihrer Oberseite zumindest eine Eintrittsöffnung (18) aufweist, welche derart angeordnet sind, dass, wenn die Neutralisationseinheit (4) an der Oberseite der Hebeeinheit (2) angeordnet ist, die Austrittsöffnung (34) der Eintrittsöffnung (18) gegenüberliegt.

5. Kondensathebeanlagensystem nach Anspruch 4, **dadurch gekennzeichnet, dass** die Neutralisationseinheit (4) mehrere Austrittsöffnungen (34) aufweist und die Hebeeinheit (2) an ihrer Oberseite eine der Anzahl der Austrittsöffnungen (34) entsprechenden Anzahl von Eintrittsöffnungen (18) aufweist, welche derart angeordnet sind, dass, wenn die Neutralisationseinheit (4) an der Oberseite der Hebeeinheit (2) angeordnet ist, jeweils eine Austrittsöffnung (34) einer der Eintrittsöffnungen (18) gegenüberliegt.

6. Kondensathebeanlagensystem nach einem der vorangehenden Ansprüche, **dadurch gekennzeichnet, dass** die Neutralisationseinheit (4) zumindest eine Ausnehmung (46) aufweist, welche zur Aufnahme einer sich von der Hebeeinheit (2) wegerstreckenden Austrittsleitung (14) ausgebildet ist.

7. Kondensathebeanlagensystem nach einem der vorangehenden Ansprüche, **dadurch gekennzeichnet, dass** die Neutralisationseinheit (4) an Ihrer Unterseite Standfüße (30) zum Aufstellen der Neutralisationseinheit (4) aufweist.

8. Kondensathebeanlagensystem nach Anspruch 7, **dadurch gekennzeichnet, dass** zumindest einer der Standfüße (30) als ein Verschlusselement ausgebildet ist, welches in eine Austrittsöffnung (34) an der Unterseite der Neutralisationseinheit (4) dichtend einsetzbar ist.

9. Kondensathebeanlagensystem nach einem der vorangehenden Ansprüche, **dadurch gekennzeichnet, dass** die Neutralisationseinheit (4) Befestigungsmittel aufweist, welche zur Befestigung der Neutralisationseinheit (4) an einer Wand ausgebildet sind.

10. Kondensathebeanlagensystem nach einem der vorangehenden Ansprüche, **dadurch gekennzeichnet, dass** die Neutralisationseinheit (4) zumindest eine seitliche Austrittsöffnung (48) aufweist.

11. Kondensathebeanlagensystem nach Anspruch 10, **dadurch gekennzeichnet, dass** die seitliche Austrittsöffnung (48) von einer unteren Aufstandsfläche der Neutralisationseinheit (4), welche vorzugsweise von Standfüßen (30) gebildet wird, einen vertikalen Abstand hat, welcher größer ist als der vertikale Abstand zumindest einer Eintrittsöffnung (18) der Hebeeinheit (2) von deren unterer Aufstandsfläche.

12. Kondensathebeanlagensystem nach einem der vorangehenden Ansprüche, **dadurch gekennzeichnet, dass** in der Neutralisationseinheit (4) der Aufnahmeraum (20) für ein Neutralisationsmittel von einer unteren Aufstandsfläche der Neutralisationseinheit (4), welche vorzugsweise von Standfüßen (30) gebildet wird, einen vertikalen Abstand hat, welcher größer ist als der vertikale Abstand zumindest einer Eintrittsöffnung (18) der Hebeeinheit (2) von deren unterer Aufstandsfläche.

13. Kondensathebeanlagensystem nach einem der vorangehenden Ansprüche, **dadurch gekennzeichnet, dass** die Neutralisationseinheit (4) zumindest an ihrer Unterseite eine Umfangskontur aufweist, welche zumindest der Umfangskontur der Hebeeinheit (2) an deren Oberseite entspricht.

14. Kondensathebeanlagensystem nach einem der vorangehenden Ansprüche, **dadurch gekennzeichnet, dass** die Neutralisationseinheit (4) an oder in dem Aufnahmeraum (20) ein Prüfmittel (56) zum Erfassen des pH-Wertes eines Neutralisationsmittels in dem Aufnahmeraum (20) aufweist.
